# EUROPÄISCHE PATENTSCHRIFT

(11) **EP 1 947 293 B1**
(45) Veröffentlichungstag und Bekanntmachung des Hinweises auf die Patenterteilung: **04.11.2009**
(21) Anmeldenummer: 07001073.1
(22) Anmeldetag: 18.01.2007
(51) Int. Cl.: F01D 5/14, F01D 9/02

(54) **Leitschaufel für eine Gasturbine**
Guide vane for a gas turbine
Aube directrice pour turbine à gaz

(43) Veröffentlichungstag der Anmeldung: 23.07.2008
(73) Patentinhaber: SIEMENS AKTIENGESELLSCHAFT, 80333 München (DE)
(72) Erfinder: Beeck, Alexander Ralph, Orlando, FL 32828 (US); Bergander, Katharina, 13503 Berlin (DE); Bostanjoglo, Georg, Dr., 12161 Berlin (DE); Buchal, Tobias, Dr., 40489 Düsseldorf (DE); Eßer, Winfried, Dr., 44805 Bochum (DE); Goldschmidt, Dirk, Dr., 47445 Moers (DE); Koch, Torsten, 46145 Oberhausen (DE); Küperkoch, Rudolf, 45219 Essen (DE); Mattheis, Thorsten, 45473 Mühlheim (DE); Münzer, Jan, 10439 Berlin (DE); Müsgen, Ralf, 45147 Essen (DE); Oechsner, Matthias, Dr., 45481 Mülheim an der Ruhr (DE); Pickert, Ursula, 45470 Mülheim an der Ruhr (DE); Vosberg, Volker, Dr., 45476 Mühlheim an der Ruhr (DE)

(56) Entgegenhaltungen:
- EP-A- 1 298 286
- WO-A-2005/040559
- US-A1- 2003 002 979

## Beschreibung

Die Erfindung bezieht sich auf eine Gasturbine gemäß dem Oberbegriff des Anspruchs 1.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Anzahl von Brennern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine dem jeweiligen Brenner nachgeschaltete Turbineneinheit geführt, wo es sich arbeitsleistend entspannt.

Die Turbineneinheit einer Gasturbine weist zur Impulsübertragung des Arbeitsmediums auf die Turbinenwelle eine Anzahl von mit der Turbinenwelle verbundenen, rotierbaren Laufschaufeln auf. Die Laufschaufeln sind dazu kranzförmig an der Turbinenwelle angeordnet und bilden somit eine Anzahl von Laufschaufelkränzen oder Laufschaufelreihen. Die Turbine und der Verdichter sind auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist.

Zur Strömungsführung des Arbeitsmediums und zur Gewährleistung eines möglichst hohen Wirkungsgrades beim Impulsübertrag auf die Laufschaufeln umfasst die Turbineneinheit üblicherweise weiterhin eine Anzahl von feststehenden Leitschaufeln. Diese sind ebenfalls kranzförmig unter der Bildung von Leitschaufelkränzen oder Leitschaufelreihen an einem Innengehäuse oder dem Stator der Turbine befestigt. Die Laufschaufeln dienen zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinander folgenden Laufschaufelreihen oder Laufschaufelkränzen. Ein aufeinander folgendes Paar aus einem Kranz von Leitschaufeln oder einer Leitschaufelreihe und aus einem Kranz von Laufschaufeln oder einer Laufschaufelreihe wird dabei auch als Turbinenstufe bezeichnet.

Eine Leitschaufel weist in der Regel eine auch als Schaufelfuß bezeichnete Plattform auf, die zur Fixierung der jeweiligen Leitschaufel am Innengehäuse der Turbine als Wandelement angeordnet ist, und die die äußere Begrenzung eines Heißgaskanals für das die Turbine durchströmende Arbeitsmedium bildet. Für eine effiziente Strömungsführung des Arbeitsmediums in Richtung auf die sich einer Leitschaufelreihe anschließende Laufschaufelreihe weist die Leitschaufel darüber hinaus üblicherweise ein profiliertes Schaufelblatt auf, das an den Schaufelfuß angeformt ist. Das Schaufelblatt erstreckt sich dabei zwischen dem Schaufelfuß einerseits und einer an das Schaufelblatt angeformten Deckplatte andererseits, die im Bereich der jeweiligen Leitschaufelreihe den Heißgaskanal für das Arbeitsmedium in Richtung zur Turbinenwelle hin begrenzt. Das Schaufelblatt sowie der daran angeformte Schaufelfuß und die ebenfalls daran angeformte Deckplatte bilden gemeinsam einen Schaufelgrundkörper der jeweiligen Leitschaufel, der üblicherweise einstückig ausgeführt ist. Ein derartiger Schaufelgrundkörper kann beispielsweise durch Gießen, gegebenenfalls auch in einkristalliner Form, hergestellt sein.

Hinsichtlich ihrer spezifischen Auslegung, also insbesondere hinsichtlich der Wahl einer geeigneten Geometrie, einer geeigneten Dimensionierung und/oder eines geeigneten Materials, ist es zur Gewährleistung eines möglichst hohen Wirkungsgrades bei der Strömungsführung und beim Impulsübertrag wünschenswert, derartige Leitschaufeln spezifisch an die besonderen Gegebenheiten und Randbedingungen an ihrem jeweiligen Einsatzort anzupassen. Insbesondere bei Gasturbinen mit Brennkammersystemen, die eine Mehrzahl von in Umfangsrichtung verteilt um die Turbinenwelle herum angeordneten Rohrbrennkammern aufweisen, kann es dabei in Umfangsrichtung um die Turbinenwelle herum zu lokalen Schwankungen, Differenzen und Inhomogenitäten hinsichtlich der jeweils herrschenden spezifischen Strömungs- und Temperaturverhältnisse kommen. Damit hängt insbesondere für die Leitschaufeln der so genannten ersten Leitschaufelreihe, also der zwischen der Brennkammer und der in Strömungsrichtung des Heißgases gesehen ersten Laufschaufelreihe angeordneten Leitschaufelreihe, die Anströmung und die thermische Belastung der jeweiligen Leitschaufel vergleichsweise stark von der exakten Einbauposition der Leitschaufel innerhalb der Leitschaufelreihe ab.

Um diesen unterschiedlichen Einsatzbedingungen der Leitschaufel Rechnung zu tragen und dennoch einen besonders hohen Wirkungsgrad und eine hohe betriebliche Sicherheit für die Gasturbine zu gewährleisten, wird bei der Auslegung der Leitschaufeln üblicherweise, insbesondere hinsichtlich geeigneter Materialwahl, der Fall der höchst belasteten Leitschaufel in der jeweiligen Leitschaufelreihe zugrunde gelegt, so dass die einer minderen Belastung ausgesetzten Leitschaufeln üblicherweise mit sehr hohen Sicherheitsreserven ausgelegt sind.

Alternativ können bei derartigen Gasturbinen auch Systeme zum Einsatz kommen, in denen individuell angepasste Leitschaufeln verwendet werden, um den mit der Einhaltung zu hoher Sicherheitsreserven verbundenen zusätzlichen konstruktiven und apparativen Aufwand zu vermindern. Bei derartigen Systemen sind individuell an die jeweilige Einbauposition angepasste Leitschaufeln vorgesehen, was jedoch eine erhöhte Vorhaltung an Ersatzteilen und insbesondere in Reparaturfällen eine gezielte Sonderanfertigung von an einzelne Randbedingungen angepassten Leitschaufeln bedingt. Auch derartige Systeme sind somit nur mit erhöhtem technischem und apparativem Aufwand bereitstellbar.

Des Weiteren ist aus der EP 1 298 286 A2 eine Leitschaufelanordnung für eine Flugzeug-Gasturbine mit während des Betriebs verstellbaren Leitschaufeln bekannt. Die verstellbaren Leitschaufeln umfassen dabei jeweils einen vorderen und einen hinteren profilierten Strömungskörper, deren Abstand in Abhängigkeit der Flugphase des Flugzeugs einstellbar ist.

Der Erfindung liegt daher die Aufgabe zugrunde, eine Gasturbine der oben genannten Art anzugeben, mit der bei besonders gering gehaltenem apparativen und logistischen Aufwand ein verbesserter Wirkungsgrad erreicht werden kann.

Bezüglich der Gasturbine wird diese Aufgabe erfindungsgemäß gelöst, indem mindestens zwei Leitschaufeln des Leitschaufelkranzes Strömungsführungskörper mit unterschiedlichen Vorleitblättern aufweisen.

Die Erfindung geht dabei von der Überlegung aus, dass bei einer Gasturbine mit einer Mehrzahl von Brennkammern erfindungsgemäß eine Homogenisierung des Strömungsprofils besonders wirksam umgesetzt werden kann. Um dabei unter Rückgriff auf durch die Verschaltung der Vorleitblätter erreichbaren zusätzlichen Freiheitsgrade besonders wirksam den auftretenden Inhomogenitäten im Strömungsprofil entgegenzuwirken, weisen mindestens zwei der Leitschaufeln Strömungsführungskörper mit unterschiedlichen Vorleitblättern auf. Hierdurch können die einzelnen Heißgasströme jeder Brennkammer beim Übergang in den Ringkanal der Turbine gemäß ihren lokalen Strömungsbedingungen von den lokal angepassten Strömungsführungskörpern besonders effizient umgelenkt werden.

Die Leitschaufel sollte zur Gewährleistung eines besonders gering gehaltenen apparativen und logistischen Aufwands grundsätzlich ein standardisiertes und für alle Einbaupositionen verwendbares Grundbauteil aufweisen, das insbesondere im Nachrüst- und im Reparaturfall für beliebige Einbaupositionen innerhalb der jeweiligen Leitschaufelreihe geeignet verwendbar ist. Dazu ist bei der jeweiligen Leitschaufel der einstückig ausgeführte Schaufelgrundkörper vorgesehen, der den Schaufelfuß, die Deckplatte und das sich zwischen diesen erstreckende profilierte Schaufelblatt umfasst. Um aber dennoch bei der Verwendung derartig standardisierter, einheitlich gehaltener Komponenten eine individualisierte Anpassung an die lokal bedingten Anströmund Heißgasverhältnisse gewährleisten zu können, ist in Ergänzung zu diesem Schaufelgrundkörper in der Art einer Vorleitschaufel das Vorleitblatt vorgesehen, dessen Geometrie insbesondere geeignet an die jeweiligen lokalen Strömungsverhältnisse angepasst sein sollte.

Damit können durch geeignete Geometriewahl des Vorleitblatts unterschiedliche Anströmbedingungen vor der Eintrittskante des eigentlichen Schaufelblatts berücksichtigt werden, wobei die genannten Unterschiede kompensiert oder zumindest reduziert werden können. Für eine besonders einfache Montage und somit einen besonders gering gehaltenen Aufwand sollte das Vorleitblatt dabei insbesondere modular ausgeführt sein, so dass durch ein Anfügen des Vorleitblatts an den Schaufelgrundkörper auf vergleichsweise einfache Weise die endgültig zum Einbau vorgesehene Leitschaufel bereitgestellt werden kann.

Gerade die modulare Bauweise infolge der Kombination des Schaufelgrundkörpers mit dem als zusätzliches Modul vorgesehenen Vorleitblatt ermöglicht durch eine geeignete Kombination dieser Komponenten eine besonders hohe Flexibilität bei der Anpassung der Leitschaufel an individuelle Bedingungen unter Rückgriff auf ein besonders hohes Maß an standardisierten Komponenten. Um diese Flexibilität besonders konsequent und vorteilhaft zu nutzen, ist vorzugsweise der Strömungsführungskörper aus einem im Vergleich zum Schaufelgrundkörper temperaturfesteren Material gefertigt. Damit kann insbesondere dem Umstand Rechnung getragen werden, dass gerade in der ersten Leitschaufelreihe der Strömungsführungskörper die thermisch am meisten belastete Komponente ist, die unmittelbar mit dem aus den Brennkammern abströmenden Heißgas beaufschlagt wird. Insbesondere kann dabei der Strömungsführungskörper aus einem keramischen Material gefertigt sein.

Insbesondere im Hinblick auf besonders einfach gehaltene Reparatur- oder Wartungsarbeiten sollte der Strömungsführungskörper für eine besonders einfache Montage am Schaufelgrundkörper ausgelegt sein. Dies ist insbesondere erreichbar, indem der Strömungsführungskörper vorteilhafterweise zwischen den Schaufelfuß und die Deckplatte des Schaufelgrundkörpers eingeschoben ist. In weiterer vorteilhafter Ausgestaltung kann dann der Strömungsführungskörper endseitig mit dem Schaufelfuß und mit der Deckplatte des Schaufelgrundkörpers stoff-, kraft- und/oder formschlüssig verbunden, insbesondere verschweißt oder verlötet, werden.

Die Ausstattung des Schaufelgrundkörpers mit dem zugeordneten Strömungsführungskörper ist vorzugsweise für eine Leitschaufel der ersten Leitschaufelreihe vorgesehen.

Die mit der Erfindung erzielten Vorteile bestehen insbesondere darin, dass durch die Kombination des Schaufelgrundkörpers mit einem diesem zugeordneten Strömungsführungskörper unter weitgehendem Rückgriff auf standardisierte Komponenten die Herstellung von individualisiert an lokal variierende Einsatzbedingungen spezifisch angepassten Leitschaufeln auf besonders einfache Weise ermöglicht ist.

Selbst bei standardisiert ausgeführtem Schaufelgrundkörper können dabei durch geeignete Wahl von Geometrie und Positionierung des Strömungsführungskörpers in Relation zum Schaufelgrundkörper lokale Unterschiede hinsichtlich Strömungsführung und Anströmung der einzelnen Leitschaufeln infolge der Positionierung in der jeweiligen Leitschaufelreihe kompensiert oder reduziert werden, so dass das Eintrittsprofil für die der Leitschaufelreihe nachfolgende Turbinenlaufschaufelreihe aerodynamisch homogener wird. Dadurch können u. a. Schwingungsanregungen im Laufschaufelbereich reduziert werden. Eine derartige Verwendung von Anbauteilen zur Anpassung einer Standardleitschaufel an unterschiedliche Einsatzbedingungen kann insbesondere die Produktion und Vorhaltung verschiedener geometrisch ähnlicher Bauteile, nämlich einer Vielzahl von vollständigen, an die jeweiligen Einsatzbedingungen individuell angepassten Leitschaufeln, ersetzen.

Weiterhin kann der Strömungsführungskörper auch in der Art einer Sollbruchstelle ausgelegt und dimensioniert sein, so dass bei Verschleiß oder Überlastungserscheinungen zunächst mit einem Ausfall oder einer Beschädigung des Strömungsführungskörpers zu rechnen ist, bevor derartige Schäden am eigentlichen Schaufelkörper auftreten. Wartungs- und Reparaturarbeiten arbeiten sind dadurch bedeutend erleichtert, da im Schadensfall lediglich ein Austausch des Strömungsführungskörpers und nicht etwa der vollständigen Leitschaufel erforderlich ist.

Ein Ausführungsbeispiel der Erfindung wird anhand einer Zeichnung näher erläutert. Darin zeigen:
- FIG 1: einen Längsschnitt durch eine Gasturbine und
- FIG 2: eine Leitschaufel.

Gleiche Teile sind in beiden Figuren mit denselben Bezugszeichen versehen.

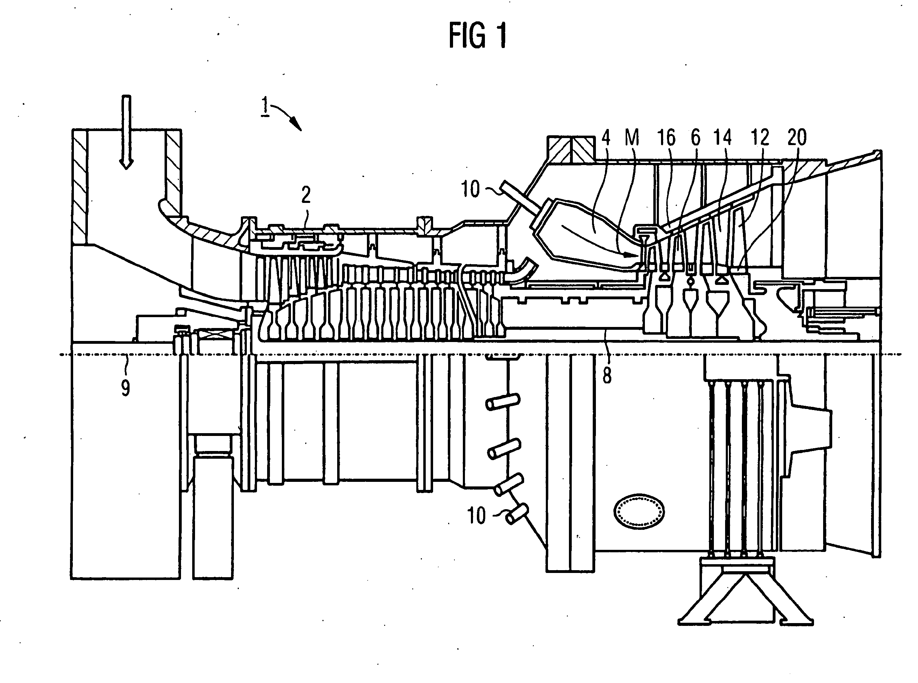

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht näher dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist und die um ihre Mittelachse 9 drehbar gelagert ist.

Die Brennkammeranordnung 4 umfasst eine Anzahl von kranzförmig um die Turbinenwelle 8 herum angeordneten individuellen Brennkammern, von denen jede mit jeweils einem Brenner 10 zur Verbrennung eines flüssigen oder gasförmigen Brennstoffs bestückt ist. Die Brennkammern sind dabei an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist einen auch als Plattform bezeichneten Schaufelfuß 18 auf, der zur Fixierung der jeweiligen Leitschaufel 14 am Innengehäuse 16 der Turbine 6 als Wandelement angeordnet ist. Der Schaufelfuß 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

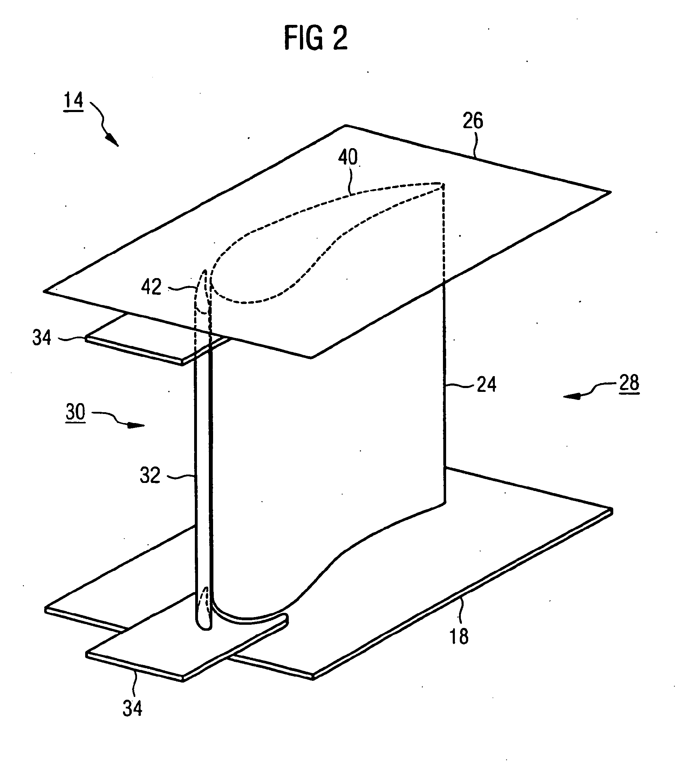

In FIG 2 ist eine Leitschaufel 14 aus der so genannten ersten Leitschaufelreihe, also aus der zwischen dem Brennkammerauslass und der in Strömungsrichtung des Heißgases gesehen ersten Laufschaufelreihe angeordneten Leitschaufelreihe, gezeigt. Wie dieser Darstellung entnehmbar ist, umfasst die Leitschaufel 14 ein profiliertes Schaufelblatt 24, das am Schaufelfuß 18 angeformt ist. Das Schaufelblatt 24 erstreckt sich zwischen dem Schaufelfuß 18 einerseits und einer an das Schaufelblatt 24 ebenfalls angeformten Deckplatte 26. Schaufelfuß 18, Schaufelblatt 24 und Deckplatte 26 sind dabei einstückig ausgeführt und bilden gemeinsam einen monolithischen Baukörper, nämlich einen Schaufelgrundkörper 28 der Leitschaufel 14.

Die Leitschaufel 14 ist spezifisch dafür ausgelegt, unter weit gehendem Rückgriff auf standardisierte Bauteile dennoch auf vergleichsweise einfache Weise eine individualisierte Anpassung hinsichtlich Strömungsführung und thermischer Belastung an lokal variierende Einsatzbedingungen vornehmen zu können, wie sie insbesondere in der ersten Leitschaufelreihe infolge der jeweiligen relativen Positionierung zur nächstliegenden Rohrbrennkammer auftreten können. Um dies zu ermöglichen, umfasst die Leitschaufel 14 in Ergänzung zum Schaufelgrundkörper 28 einen an diesen angefügten Strömungsführungskörper 30, der ein dem Schaufelblatt 24 bzgl. der Strömungsrichtung des Arbeitsmediums M vorgeschaltetes Vorleitblatt 32 aufweist. Endseitig sind an das Vorleitblatt 32 jeweils Endplatten 34 angeformt, über die der Strömungsführungskörper 30 zwischen den Schaufelfuß 18 und die Deckplatte 26 des Schaufelgrundkörpers 28 eingeschoben ist. Zur endgültigen Montage der beiden Komponenten Schaufelgrundkörper 28 und Strömungsführungskörper 30 ist der Strömungsführungskörper 30 endseitig mit dem Schaufelfuß 18 und der Deckplatte 26 des Schaufelgrundkörpers 28 stoff-, kraft- und/oder formschlüssig verbunden, insbesondere verschweißt oder verlötet.

Die strichlierten Darstellungen in der Deckplatte 26 in FIG 2 repräsentieren näherungsweise die Konturierung der darunter liegenden Komponenten. Wie dieser Darstellung entnehmbar ist, weist das Schaufelblatt 24 eine für die Strömungsführung des Arbeitsmediums geeignet gewählte Profilierung oder Konturierung auf, die sich in der Kontur 40 niederschlägt. In ähnlicher Weise ist auch das Vorleitblatt 32 des Strömungsführungskörpers 30 zur Strömungsführung geeignet konturiert und weist eine Kontur 42 auf. Durch eine Kombination der Komponenten Schaufelgrundkörper 28 einerseits und Strömungsführungskörper 30 andererseits miteinander ist somit unter Rückgriff auf einen weit gehend standardisiert ausgeführten Schaufelgrundkörper 28 eine individualisierte Anpassung der Leitschaufel 14 an lokal unterschiedliche Strömungsverhältnisse oder Randbedingungen durch geeignete Auswahl des zugeordneten Strömungsführungskörpers 30 ermöglicht. Damit kann durch eine geeignete Wahl von Geometrie, Dimensionierung und/oder Material des Strömungsführungskörpers 30 auch bei der Verwendung standardisierter Schaufelgrundkörper 28 eine Anpassung der Leitschaufel 14 an lokal unterschiedliche Bedingungen hinsichtlich des Strömungsprofils oder der Heißgasbelastung durch das Arbeitsmedium M auf besonders einfache Weise vorgenommen werden.

Die Gasturbine 1 kann insbesondere auch eine Mehrzahl individueller Brennkammern, insbesondere Rohrbrennkammern, aufweisen. Um dadurch bedingten, noch verstärkten Inhomogenitäten im Strömungsprofil entlang des Umfangs des Turbineneinlasses wirksam zu begegnen, sind in einem derartigen Fall die Strömungsführungskörper 30 von mindestens zwei Leitschaufeln 14 mit unterschiedlichen Vorleitblättern 32 versehen.

## Patentansprüche

1. Gasturbine (1) mit mindestens zwei Brennkammern und mit einer Turbine,
in welcher in einem Kranz angeordnete Leitschaufeln (14) jeweils mit einem Schaufelgrundkörper (28) angeordnet sind, jeder Schaufelgrundkörper (28) umfassend einen Schaufelfuß (18), eine Deckplatte (26) und ein sich dazwischen erstreckendes profiliertes Schaufelblatt (24),
wobei an jedem Schaufelgrundkörper (28) ein Strömungsführungskörper (30) mit einem dem Schaufelblatt (24) bezüglich der Strömungsrichtung des Arbeitsmediums (M) der Gasturbine (1) vorgeschalteten Vorleitblatt (32) angefügt ist,
**dadurch gekennzeichnet, dass**
mindestens zwei Leitschaufeln (14) des Leitschaufelkranzes Strömungsführungskörper (30) mit unterschiedlichen Vorleitblättern (32) aufweisen.

2. Gasturbine (1) nach Anspruch 1,
deren Strömungsführungskörper (30) aus einem im Vergleich zum Schaufelgrundkörper (28) temperaturfesteren Material gefertigt ist.

3. Gasturbine (1) nach Anspruch 1 oder 2,
deren Strömungsführungskörper (30) zwischen den Schaufelfuß (18) und die Deckplatte (26) des Schaufelgrundkörpers (28) eingeschoben ist.

4. Gasturbine (1) nach Anspruch 3,
deren Strömungsführungskörper (30) endseitig mit dem Schaufelfuß (18) und der Deckplatte (26) des Schaufelgrundkörpers (28) stoff-, kraft- und/oder formschlüssig verbunden, insbesondere verschweißt oder verlötet, ist.

## Claims

1. Gas turbine (1) having at least two combustion chambers and having a turbine,
in which guide vanes (14), which are arranged in a ring and each have a vane base body (28) are arranged,
each vane base body (28) comprising a vane root (18), a cover plate (26) and a profiled vane blade (24) extending between them,
wherein a flow-routing body (30) with an advance guide blade (32) connected upstream of the vane blade (24) as seen in the direction of flow of the working medium (M) of the gas turbine (1) is joined to each vane base body (28),
**characterized in that**
at least two guide vanes (14) of the guide vane ring have flow-routing bodies (30) with different advance guide blades (32).

2. Gas turbine (1) according to Claim 1,
the flow-routing body (30) of which is made from a material that is more thermally stable than the vane base body (28).

3. Gas turbine (1) according to Claim 1 or 2,
the flow-routing body (30) of which is inserted between the vane root (18) and the cover plate (26) of the vane base body (28).

4. Gas turbine (1) according to Claim 3,
the flow-routing body (30) of which, at the end sides, is cohesively, non-positively and/or positively connected, in particular by welding or soldering, to the vane root (18) and the cover plate (26) of the vane base body (28).

## Revendications

1. Turbine (1) à gaz ayant au moins deux chambres de combustion et une turbine,
dans laquelle sont disposées des aubes (14) directrices disposées en une couronne ayant respectivement un corps (28) de base d'aube, chaque corps (28) de base d'aube comprenant une emplanture (18) d'aube, une plaque (26) de couverture et une lame (24) d'aube profilée s'étendant entre elles,
dans laquelle à chaque corps (28) de base d'aube est adjoint un corps (30) de guidage du courant, ayant une lame (32) de guidage préalable montée en amont par rapport au sens du courant du fluide (M) de travail de la turbine (1) à gaz,
**caractérisée en ce qu'**au moins deux aubes (14) directrice de la couronne d'aubes directrices ont des corps (30) de guidage du courant ayant des lames (32) différentes de guidage préalable.

2. Turbine (1) à gaz suivant la revendication 1,
dont le corps (30) de guidage du courant est en un matériau plus résistant à la température que le corps (26) de base de l'aube.

3. Turbine (1) à gaz suivant la revendication 3,
dont le corps (30) de guidage du courant est inséré entre l'emplanture (18) de l'aube et la plaque (26) de couverture du corps (28) de base de l'aube.

4. Turbine (1) à gaz suivant la revendication 1,
dont le corps (30) de guidage du courant est relié à complémentarité de matière, de force et/ou de forme, en étant notamment soudé ou brasé du côté de l'extrémité, à l'emplanture (18) de l'aube et à la plaque (26) de couverture du corps (28) de base de l'aube.
